# EUROPEAN PATENT APPLICATION

(11) **EP 0 927 833 A1**
(43) Date of publication of application: **07.07.1999**
(21) Application number: 98301735.1
(22) Date of filing: 10.03.1998
(51) Int. Cl.: F16F 15/36

(54) **Apparatus and method for manufacturing a device for counteracting imbalance caused by the uneven distribution of a load in a rotary drum**

(30) Priority: 31.12.1997 KR 9780307
(71) Applicant: Samsung Electronics Co., Ltd., Suwon-city, Kyungki-do (KR)
(72) Inventor: Lee, Geum-chan, Suwon-city, Kyungki-do (KR); Kim, Jae-sin, Suwon-city, Kyungki-do (KR); Jang, Sam-yong, Suwon-city, Kyungki-do (KR); Kim, Jin-soo, Suwon-city, Kyungki-do (KR); Lee, Hyun-moo, Suwon-city, Kyungki-do (KR); Han, Woo-jeong, Sungnam-city, Kyungki-do (KR); Ahn, Ki-pyo, Paldal-gu, Suwon-city, Kyungki-do (KR)
(74) Representative: Geary, Stuart Lloyd

(57) **Abstract**

A method of manufacturing a device for counteracting imbalance caused by the uneven distribution of a load in a rotary drum comprising two members (11, 12) and a plurality of balls (15) is disclosed. The method comprises the steps of driving transfer means (200) to transfer a first member (11) from a supply of first members (11) to a ball dispensing means (300); controlling the ball dispensing means to dispense balls (15) into a first member (11); driving the transfer means (200) to transfer first and second members (11, 12) to a seam welding means (500) and controlling the seam welding means (500) to seam weld a first member (11) to a second member (12). An apparatus for manufacturing such a device is also disclosed.

## Description

The present invention relates to a method of manufacturing a device for counteracting imbalance caused by the uneven distribution of a load in a rotary drum, comprising two members and a plurality of balls. The invention also relates to an apparatus for manufacturing the device.

A ball balancer 10 generally includes a housing 13 comprising a lower portion 11 provided with annular races 19 around its circumference 26 and an annular cover 12 which fits onto and covers the lower portion 11. The races 19 accommodate a plurality of counterbalancing balls 15 which are free to move along the races 19 during rotation of the drum 26 to a position in which the uneven distribution of laundry within the drum 26 is counterbalanced by the weight of the balls 15. Therefore, vibration of the drum 26 and tub 25 is damped.

To ensure that the balls move smoothly in the races 19, and quickly counteract any imbalance, the races 19 are partially filled with oil or other lubricant. Holes 7a and 8a are provided in the annular cover 12 to enable oil to be injected into the races 19 following attachment of the annular cover 12 to the lower housing 11, and additional holes 7a and 7b provide passages for the discharge of air from the balancer housing 13 while the oil is injected through the holes 7a and 8a.

To manufacturing a balancer 10 of the type described above, the balls 15 must be placed in the races 19, the annular cover 12 must be first tack-welded and then seam welded to the lower housing 11, and the weld must finally be tested. All of these manufacturing steps have conventionally been carried out manually. This is disadvantageous as it takes considerable time to manufacturing each balancer 10 and a relatively large number are rejected because of manufacturing defects. Therefore, productivity is reduced and manufacturing costs increased.

It is an object of the present invention to overcome or substantially alleviate the aforementioned disadvantages.

A method of manufacturing a device for counteracting imbalance caused by the uneven distribution of a load in a rotary drum comprising two members and a plurality of balls according to the present invention, comprises the steps of driving transfer means to transfer a first member from a supply of first members to a ball dispensing means; controlling the ball dispensing means to dispense balls into a first member; driving the transfer means to transfer a second member form a supply of second members and place it on a first member; driving the transfer means to transfer first and second members to seam-welded means and controlling the seam-welding means to seam-weld a first member to a second member.

In an embodiment, the transfer means includes a turntable wherein the step of driving the transfer means to transfer a first member from a supply of first members to the ball dispensing means includes the step of driving the transfer means to transfer a first member from a supply of first members to the turntable and rotatably driving the turntable to transfer a first member to the ball dispensing means.

Preferably, the step of driving the transfer means to transfer the first and second members to the seam welding means includes the step of rotating the turntable.

The method may include the step of driving the transfer means to transfer the first and second members to a tack-welding means and controlling the tack-welding means to tack-weld the first member to the second member.

An apparatus for manufacturing a device comprising two members and a plurality of balls according to the present invention includes ball dispensing means for dispensing balls into a first member, seam welding means for seam-welding a second member to a first member and transfer means for transferring a first member from a supply of first members to the ball dispensing means, for transferring a second member from a supply of second members to place it on a first member and for transferring first and second members to the seam welding means.

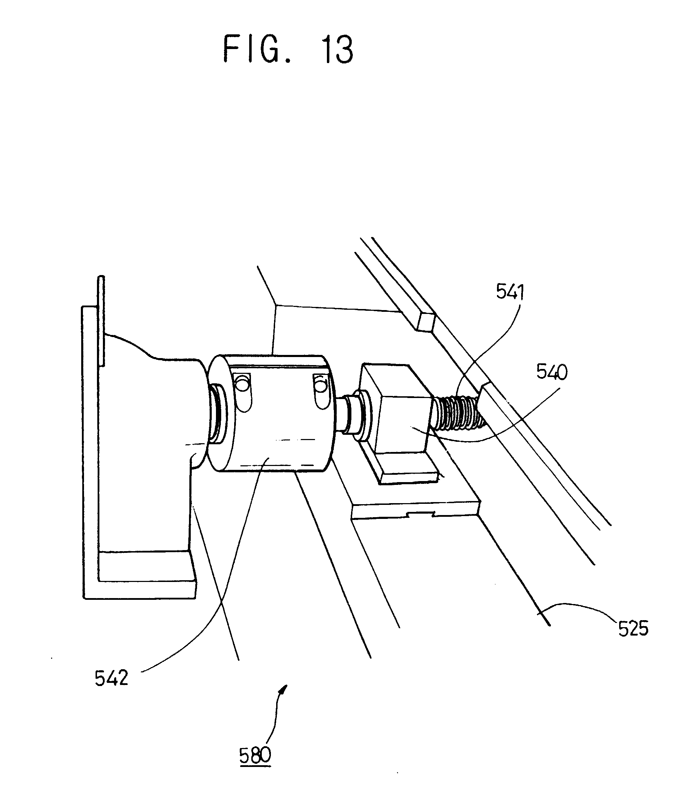

Embodiments of the present invention will now be described, by way of example only, with reference to Figures 3 to 19 of the accompanying drawings, in which:

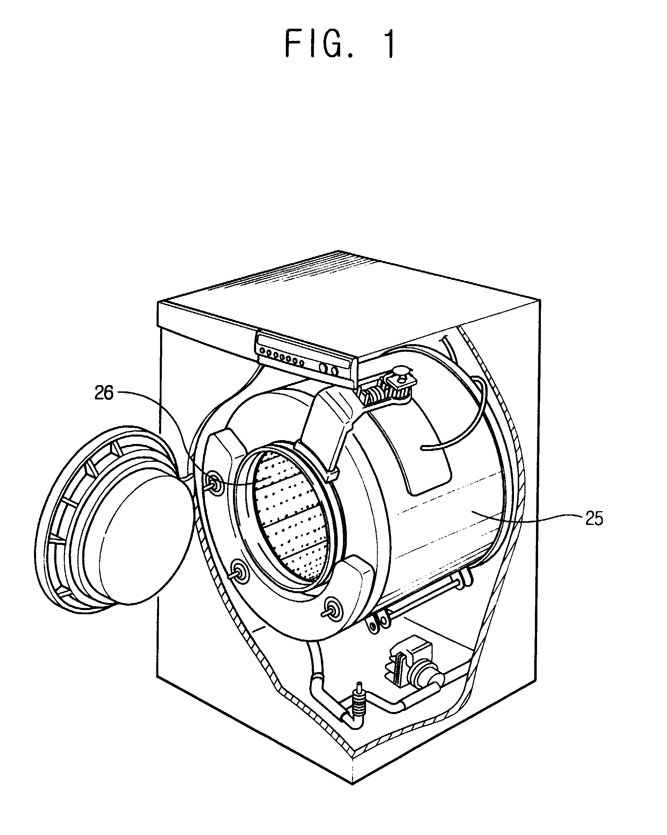

Figure 1 is a perspective view of a known drum type washing machine;

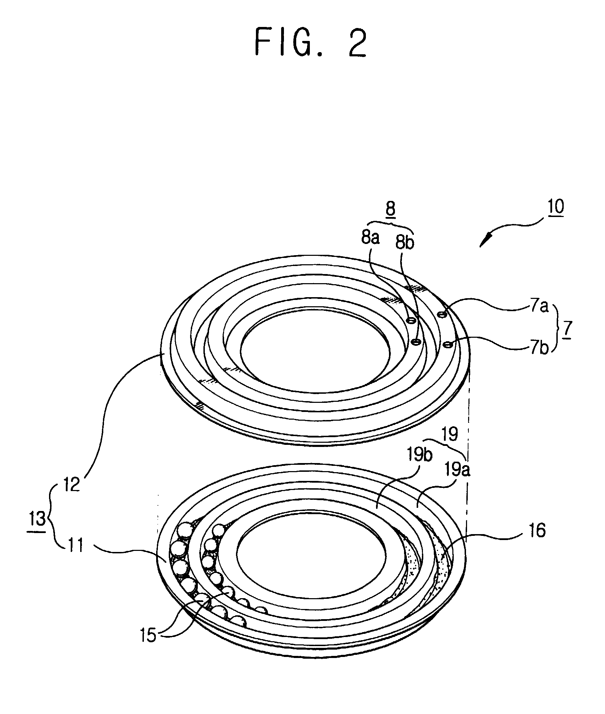

Figure 2 is an exploded perspective view of a balancer used in the washing machine shown in Figure 1;
Figure 3 is a schematic view of an apparatus for manufacturing a balancer according to the present invention;
Figure 4 is a side sectional view of the central portion of the apparatus shown in Figure 3;
Figure 5 is a perspective view of an apparatus for transferring a balancer used in the appliance shown in Figure 3;
Figure 6 is a perspective view of an apparatus for dispensing balls shown in Figure 3;
Figures 7 and 8 are partial enlarged perspective views of Figure 6;
Figure 9 is a perspective view of a tack-welding apparatus shown in Figure 3;
Figure 10 is a perspective view of a movement device shown in Figure 9;
Figure 11 is a perspective view of an apparatus for welding the balancer;
Figure 12 is an enlarged view of a welder used in the welding apparatus shown in Figure 11;
Figure 13 is a perspective view of a movement device shown in Figure 11;
Figure 14 is a perspective view of an apparatus for removing residual water remaining in the balancer;
Figure 15 is a side sectional view of Figure 14;
Figure 16 is a front view of Figure 14;
Figure 17 is a perspective view of an apparatus for testing a weld between the lower portion 11 and upper annular cover of a balancer; and
Figures 18 and 19 are side sectional views of Figure 17.

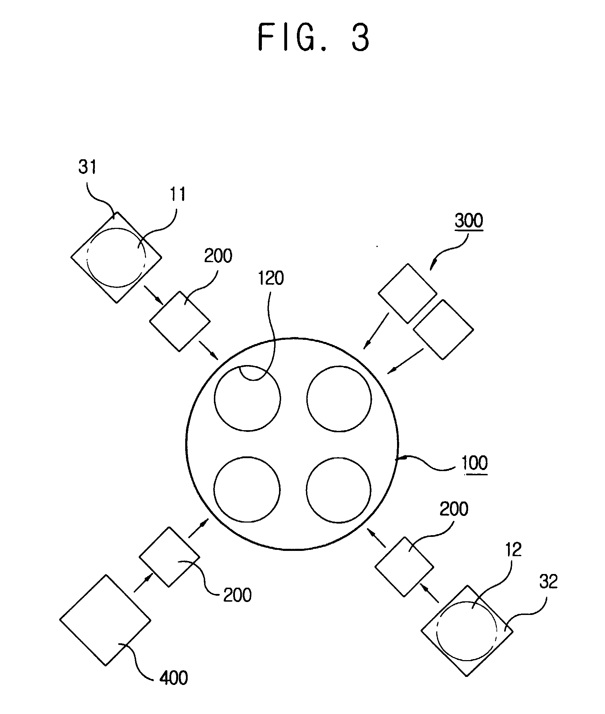

An apparatus for manufacturing a balancer 10 is illustrated in Figure 3 and comprises a rotation apparatus 100, a first load platform 31 on which a lower housing 11 of the balancer is placed, an apparatus 300 for dispensing the balls 15 into the lower housing 11, a second load platform 32 on which the annular cover 12 is placed, and an apparatus 400 for tack-welding the annular cover 12 to the lower housing 11 of the balancer 13. The apparatus for manufacturing a balancer also includes apparatus 200 for transporting the balancer 13 between manufacturing stages, an apparatus (not shown) for welding the balancer, apparatus (not shown) for seam welding the annular cover 12 to the lower housing 11, an apparatus (not shown) for removing residual water from the balancer 13, and an apparatus (not shown) for testing the weld.

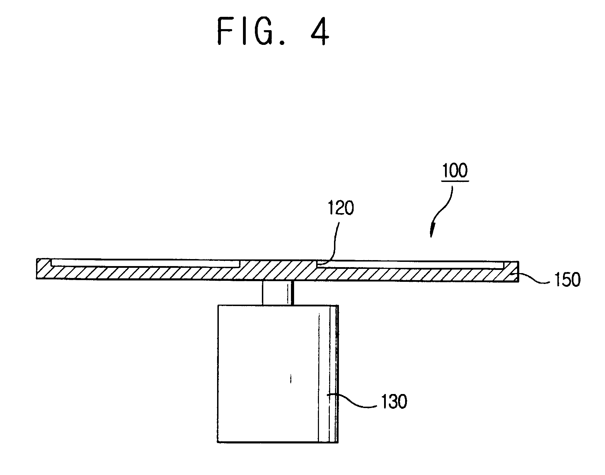

The rotation apparatus 100, as shown in Figure 4, comprises a turntable 150, driven by a motor 130 mounted beneath it. The upper face of the turntable 150, is provided with four recesses 120 each having a size sufficient to accommodate a balancer housing 13.

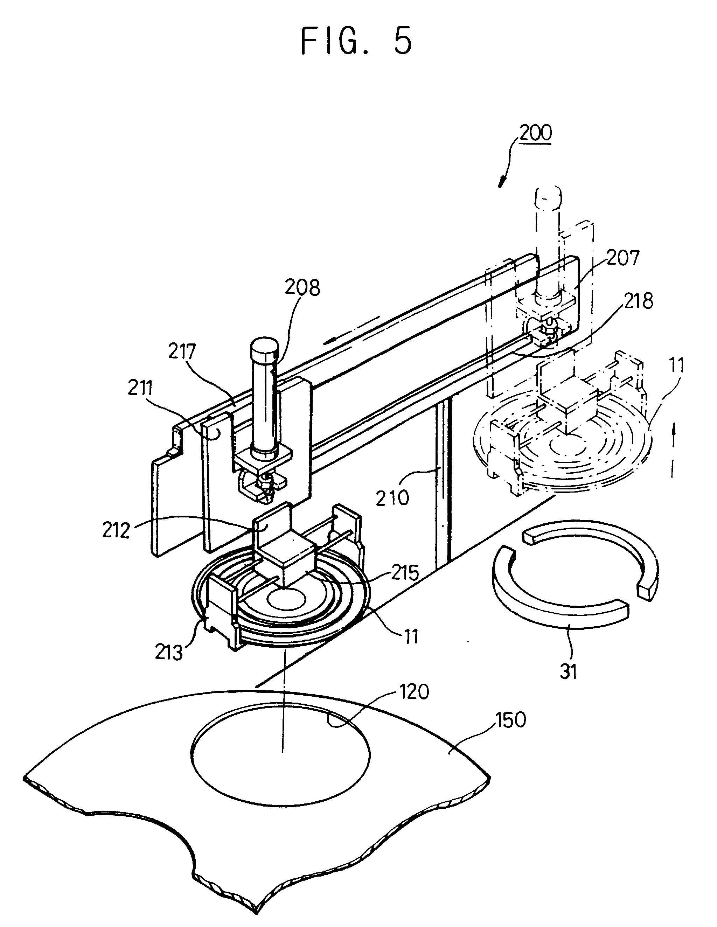

A transferring apparatus 200 is illustrated in Figure 5. A first transferring apparatus is disposed between the first load platform 31 and the rotation apparatus 100, a second between the second load platform 32 and the rotation apparatus 100, and a third between the tack-welding apparatus 400 and the rotation apparatus 100. Each transferring apparatus 200 comprises a main frame 207 supported by a bar 210 and having a guide rail 218 formed along its length, a first cylinder 217 mounted on the main frame 207 for moving a second cylinder 208 mounted on a plate 211 along the guide rail 218, a bracket 212 mounted on the plate 211 and a third cylinder 215 mounted on the bracket 212 for driving a pair of grippers 213.

When the plate 211 is lowered by the second cylinder 208, the third cylinder 215 drives the grippers 213 to grip the uppermost lower housing 11 in a stack loaded on the first load platform 31. The second cylinder 208 lifts the plate 211 up, and the first cylinder 217 moves the second cylinder 208 along the guide rail 218 to a position above the turntable 150. The first cylinder 208 lowers the plate 211 towards the turntable 150, and the third cylinder 215 operates the grippers 213 to release the lower housing 11 to drop it in one of the four recesses in the upper face of the turntable 150.

Figure 3 shows the transferring apparatus 200 for transferring the lower housing 11. A second transferring apparatus 200 disposed between the second load platform 32 and the rotation apparatus 100 transfers the upper cover 12 loaded on the second load platform 32 to the turntable 150, and the third transferring apparatus 100 disposed between the rotation apparatus 100 and the tack-welding apparatus 400 transfers the balancer housing 13, which is an assembly of the lower housing 11 and the upper cover 12, to the tack-welding apparatus 400.

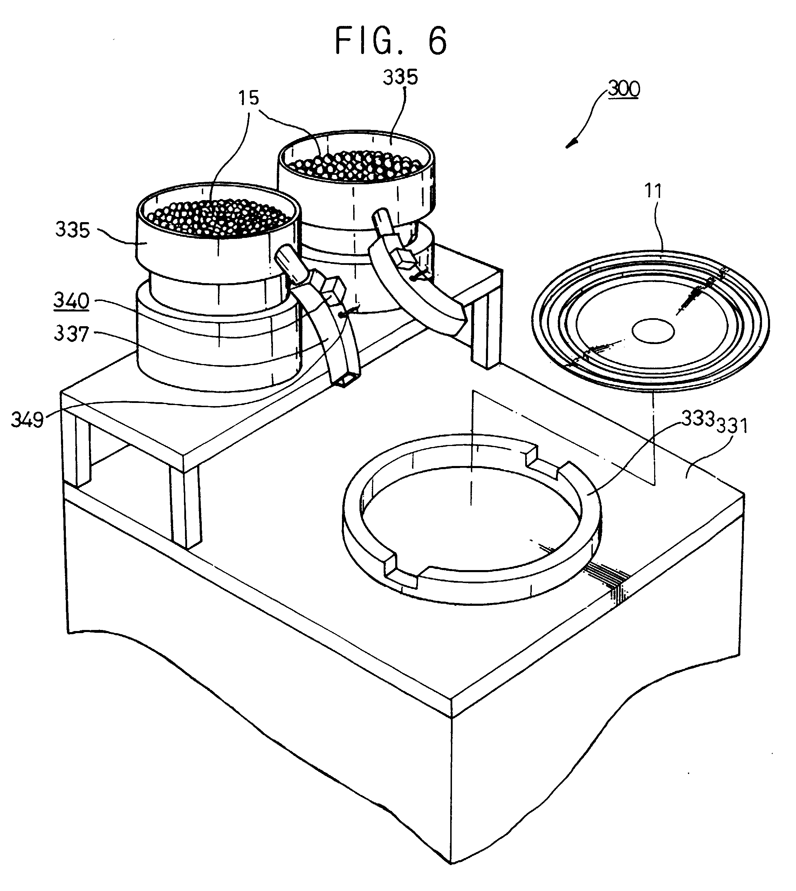

A perspective view of the apparatus 300 for dispensing the balls 15 is shown in Figure 6. The ball dispensing apparatus 300 comprises a jig 333 mounted on a table 331, a hopper 335 containing the balls 15 to be dispensed, a chute 337 extending from the hopper 335 through which the balls are dispensed, and a control device 340 for controlling the dispensing operation. The ball dispensing apparatus 300 is equipped with a pair of hoppers 335, chutes 337 and control devices 340 in order to dispense balls 15 into respective races 19 of the lower housing 11 simultaneously.

The lower housing 11 is loaded onto the jig 333 and balls 15 are dispensed from the container 335 through the chute 337 into the races 19 in the lower housing 11.

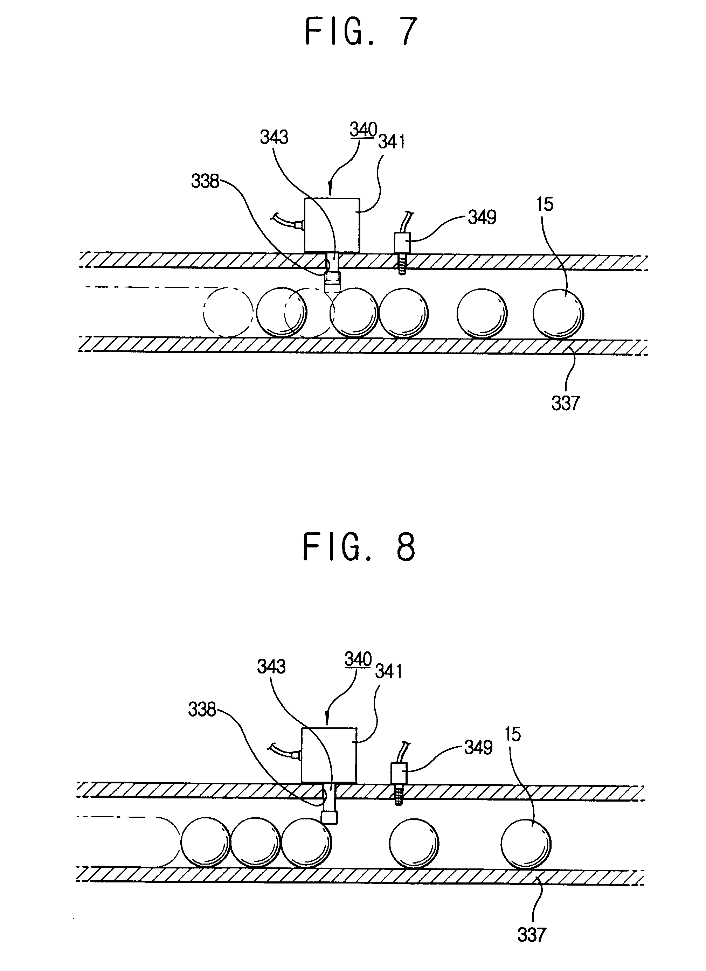

The operation of the control device is illustrated in Figures 7 and 8. The control device 340 includes a control cylinder 341 mounted on the chute 337 for controlling the movement of a piston 343 which extends into the chute 337 through a hole 338. The piston 343 prevents the discharge of balls 15 by blocking the chute 337. Operation of the control cylinder 341 causes the piston 343 to withdraw from the chute 337 to allow balls 15 to be dispensed.

A sensor 349 is mounted on the chute 337 and counts the number of balls 15 discharged through the chute 337 passed the piston 343.

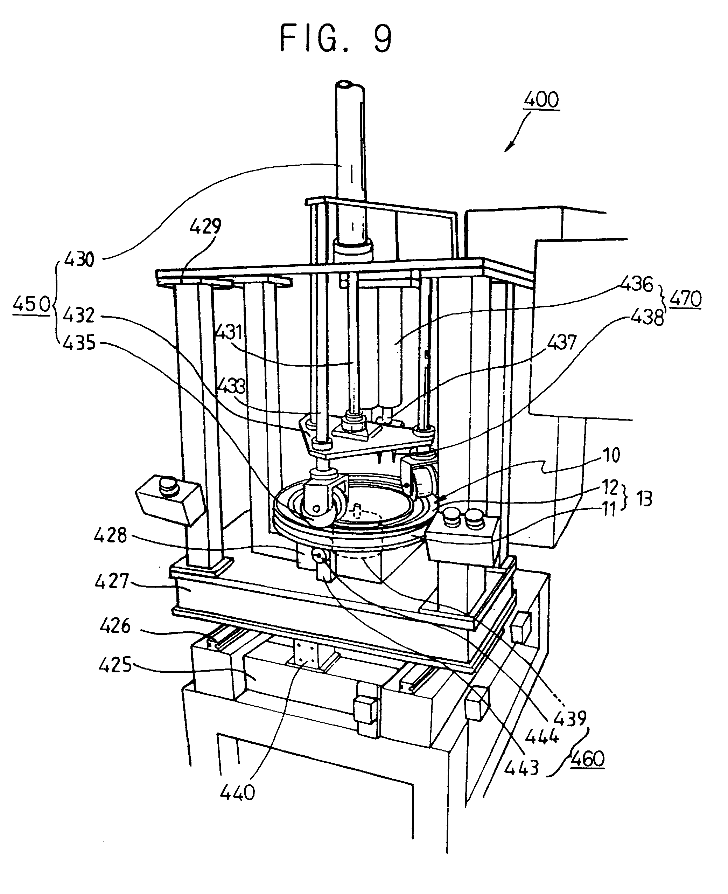

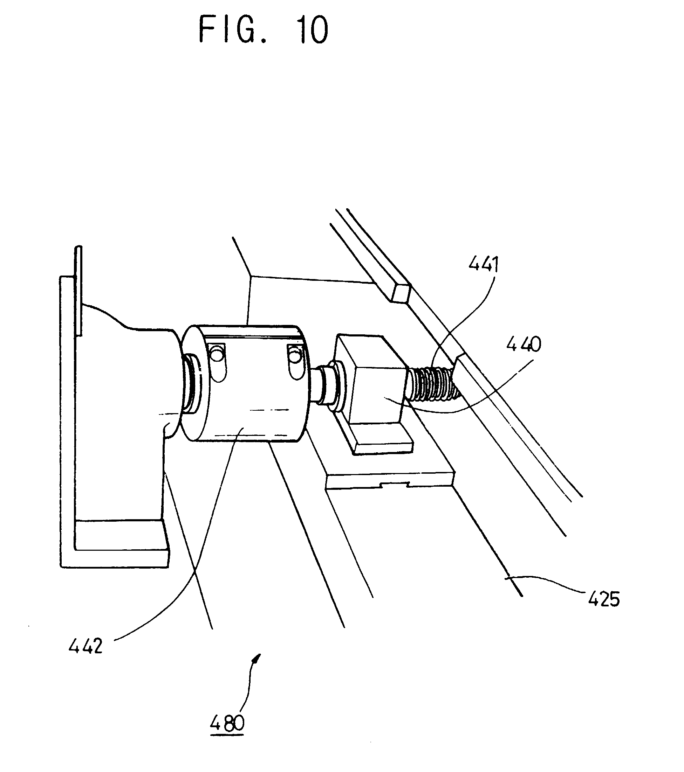

A perspective view of a tack-welding apparatus is shown in Figure 9, and Figure 10 is a perspective view of a movement device. The tack welding apparatus 400 comprises a loading device 450 for urging the annular cover 12 against the lower housing 11 of the balancer 13 to hold them in position and fix them relative to each other, a rotation device 460 for rotating the balancer 13, a tack welding device 470 for tack-welding the inner and outer edge of the annular cover 12 which contacts the lower housing 11 and a movement device 480 for moving the balancer housing 13 in a horizontal direction relative to the tack-welding device.

The loading device 450 comprises a loading cylinder 430 having a piston 431 mounted on an upper frame 429. A plate 432 is connected to a lower end of the piston 431, and rollers 435 each mounted in a bracket 434 depend downwardly from the underside of the plate 432. The upper frame 429 is mounted on a lower frame 425 and has a table 427 on which a jig 428, for holding a balancer 13, is fixed. Movement of the plate 432 under the control of the piston 431 is guided by guide bars 433 which are positioned parallel to the piston 431 and pass through the plate 432. When the plate 432 is moved towards and into contact with a balancer 13 loaded on the jig 428 it is urged downwardly against the jig 428 and held firmly in position.

The rotation device 460 comprises support members 443 mounted on both sides of the jig 428, support rollers 444 which are mounted on each of the support members 443, and a motor 439 for rotating the rollers 444. The support rollers 444 rotatably support the balancer 13 on the jig 428. The rollers 435 of the loading device 450 urge the balancer 13 against the jig and rotate in response to rotation of the balancer 13. The tack-welding device 470 comprises a welding cylinder 436 having a piston 437 to which a plurality of welding electrodes 438 are attached. The welding cylinder 436 moves the welding electrodes 438 up and down towards and away from a balancer 13 mounted on the jig 428.

The movement device 480 comprises guide rails 426 on the lower frame 425 which guide the movement of the upper frame 429 relative to the lower frame 425. A motor 442 is fixed beneath the table 427 and moves the upper frame 429 along the guide rails 426. A guide block 440 is fixed on the lower frame 425, and receives a screw shaft 441 driven by the motor 442 to move the guide block 440 and the upper frame 429 along the screw shaft 41.

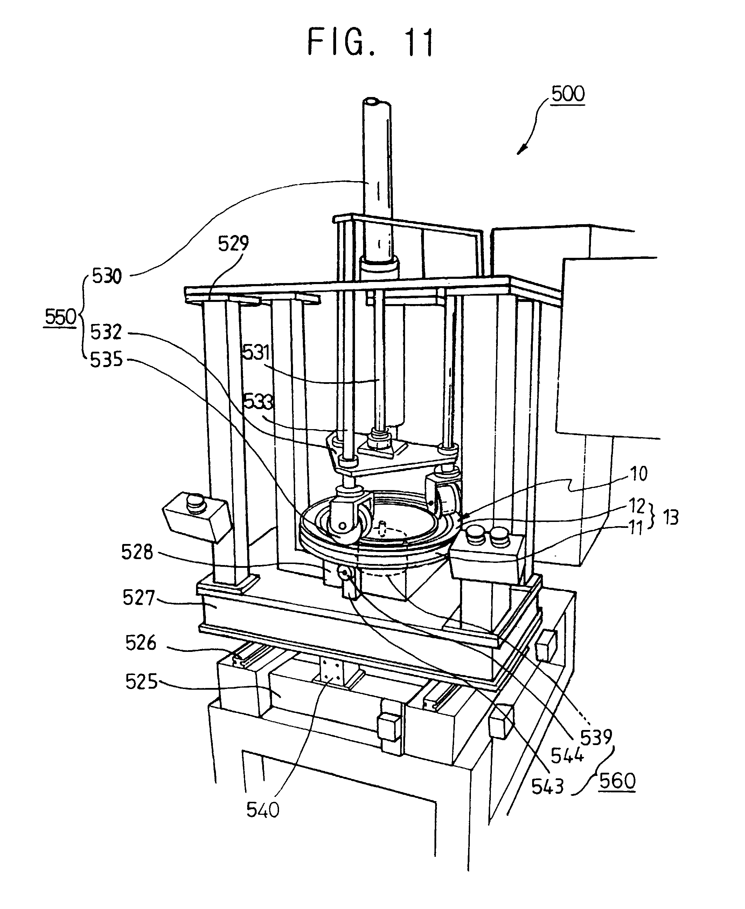

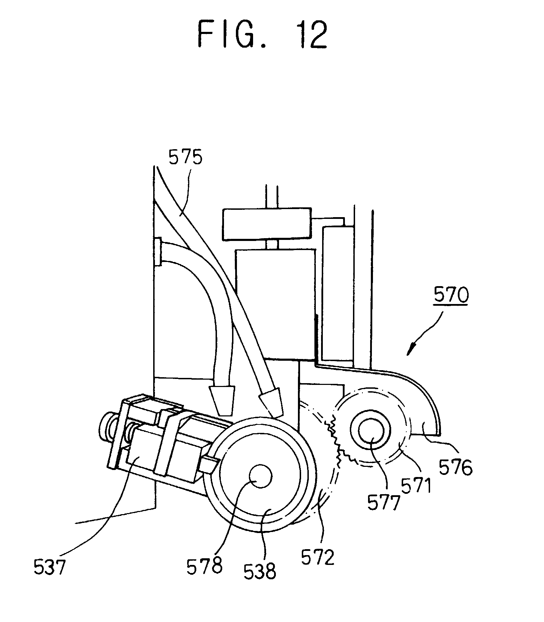

A perspective view of an apparatus for welding the balancer is illustrated in Figure 11 and an enlarged view of a welder used in the welding apparatus shown in Figure 11 is illustrated in Figure 12. The welding apparatus 500 comprises a loading device 550 for pressing the annular cover 12 into contact with the lower portion 11 of the balancer 13 to hold it in position, a turntable portion 560 for rotating the balancer housing 13 and a welder 570 for welding the annular cover 12, to the lower housing 11, and a movement device 580 for moving the balancer housing 13 in a horizontal direction.

The loading device part 550 comprises a cylinder 530 having a piston 531, mounted on an upper frame 529. The piston 531 carries a plate 532 from which rollers 535, each rotatably fixed is a bracket 534, depend. The apparatus includes a lower frame 525 having a table 527 to which a jig 528 for supporting the balancer housing 13, is fixed. A plurality of guide bars 533 mounted on the upper frame 29 guide the plate 32 as it is moved by the piston 531. When the plate 532 is moved down by the piston 531, the rollers 535 come into contact with the annular cover 12 and urge it against the lower portion 11 of the balancer 13 and hold it firmly in position against the jig 528.

The turntable portion 560 comprises a pair of support members 543 each having a support roller 544 for supporting the balancer housing on the jig 528 and a motor 539 for driving the rollers 44 to rotate the balancer 13. The rollers 535 of the loading device 550 which press the cover downwardly against the lower portion 11 of the housing 13, rotate in response to rotation of the balancer housing 13. Therefore, the motor 539 drives the rollers 544 to rotate the housing 13 and the annular cover 12 is pressed downwardly against the lower portion 11 of the housing 13 by the loading device 550.

The welder 570 comprises a welding electrode 538, a current supplier 537 for supplying current to the welding electrode 538, and a motor 576 to rotate the welding electrode 538. A first gear 571 is rotatably mounted on a shaft 577 of the motor 576, and a second gear 572 meshed with the first gear 571 is rotatably mounted on a shaft carrying the welding electrode 538. Operation of the motor 576 causes the welding electrode 538 to be rotatably driven by the first and second gears 571 and 572 to weld the cover 12 to the lower housing 11 whilst the balancer housing 13 rotates in response to operation of the motor 539 which drives the rollers 544. A cooling hose 575 is disposed above the welding electrode 538 for discharging cooling water to cool the electrode 538 which becomes hot during the welding process.

The moveable portion 580 comprises a pair of guide rails 526 on the lower frame 525 to which the table 527 is slideably mounted. A guide member 540 is mounted beneath the table 527 and has a threaded hole through which a corresponding threaded shaft 541 of a motor 542 passes. Operation of the motor 542 causes the threaded shaft 541 to rotate to move the table 527 in a horizontal direction along the guide rails 526.

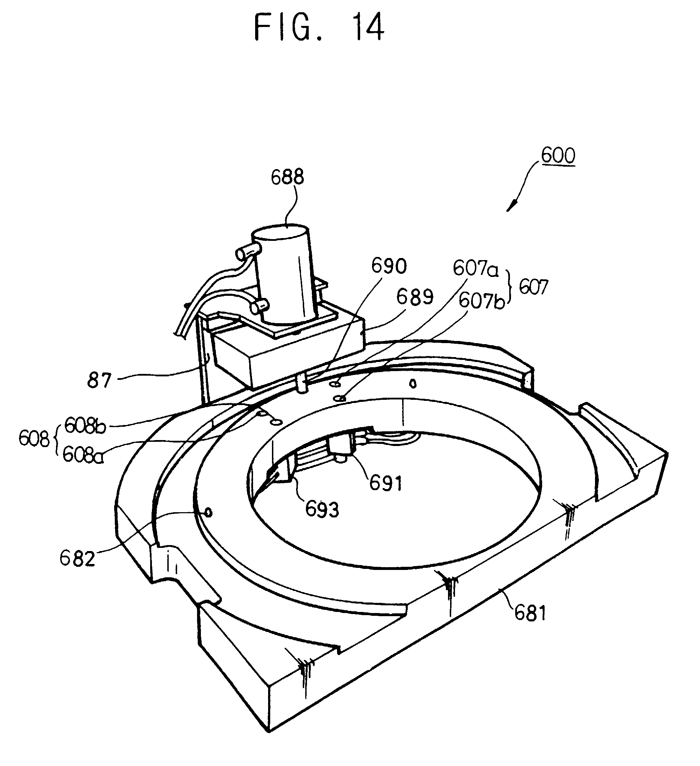

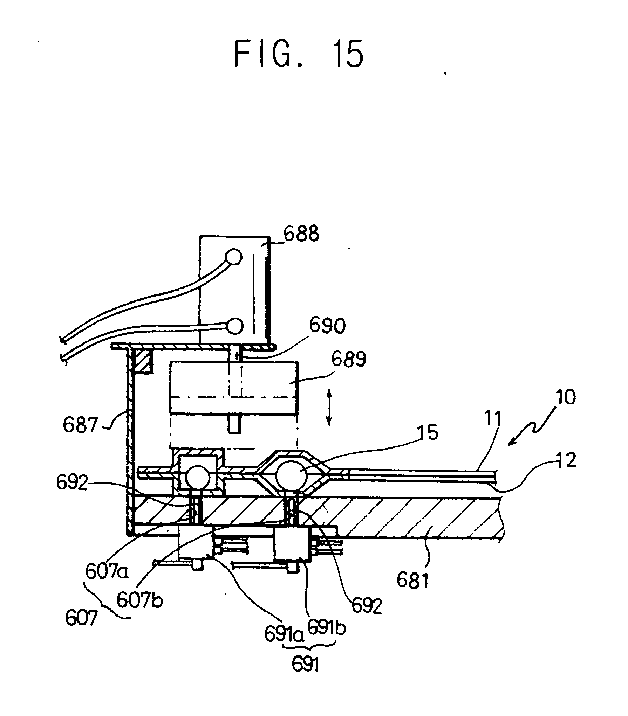

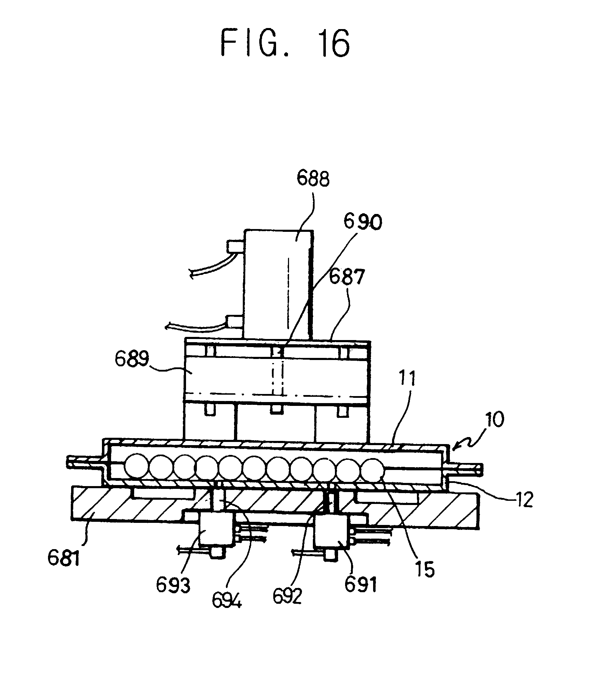

A perspective view of an apparatus for removing residual water remaining in the balancer is illustrated in Figures 14, 15 and 16. The apparatus 600 for removing residual water comprises a jig 681 for receiving a balancer 10, a support plate 687 mounted at one side of the jig 681, a cylinder 688 mounted on the support plate 687 capable of driving a fixing member 689 and a guide bar 690 for guiding the fixing member 689 during movement.

The welded balancer 10 is loaded on the jig 681 so that the holes 7, 8 in a balancer are in communication with a pair of air injection holes 607a and 607b and a pair of discharge holes 608a and 608b formed in the jig 681. A fixing pin 682 protrudes from the jig 681 which locates in a fixing hole provided in the balancer 13, to locate it in the correct position on the jig 687.

When the balancer 10 is loaded on the jig 681, the fixing member 689 is moved down by the cylinder 688 and presses against the balancer 10 to hold it firmly in position on the jig 681.

As indicated above the air injection hole 607a and the discharge hole 608a formed at the outer part of the jig 681 communicate with the holes 7a and 7b formed in the outer race of the balancer housing 13, and the air injection hole 607b and the discharge hole 608b formed in the inner part of the jig 681 communicate with the holes 8a and 8b formed in the inner race of the balancer housing 13.

A pair of air cylinders 691 and a pair of suction cylinders 693 are mounted beneath the jig 681. The nozzles 692 of the respective air cylinders 691a and 691b communicate with the air injection holes 607a and 607b, and inject air into the respective races of the balancer 10 to discharge any residual cooling water from the balancer 10 through the discharge holes 608a and 608b. The nozzles 694 of the suction cylinders 693 communicate with the discharge holes 608a and 608b and suck out the discharged residual cooling water.

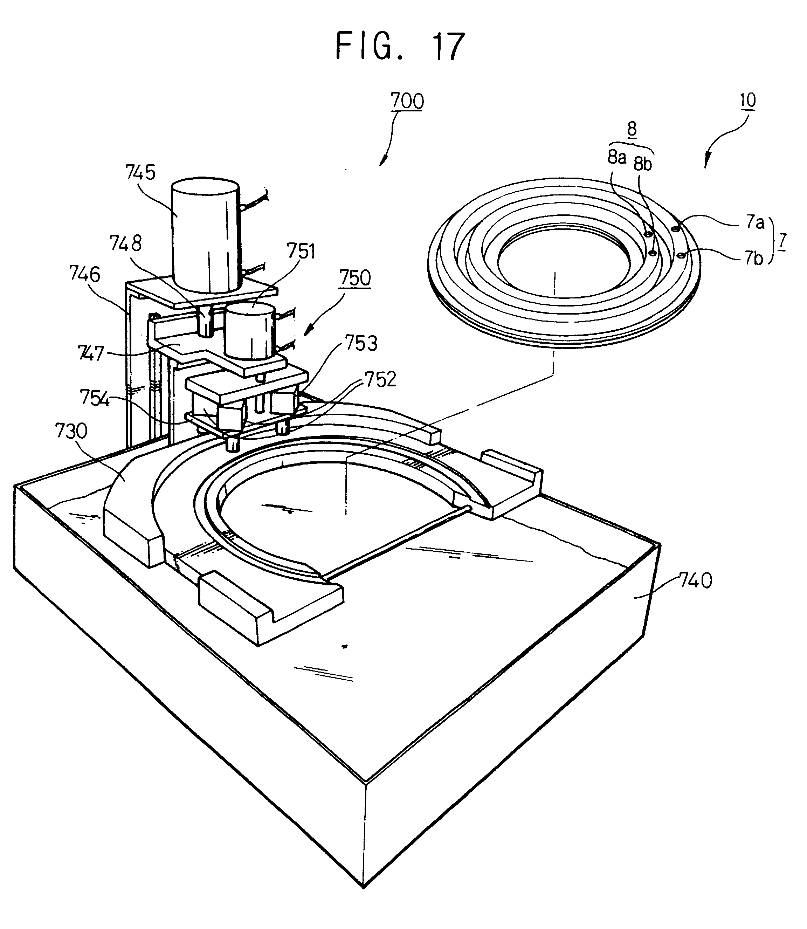

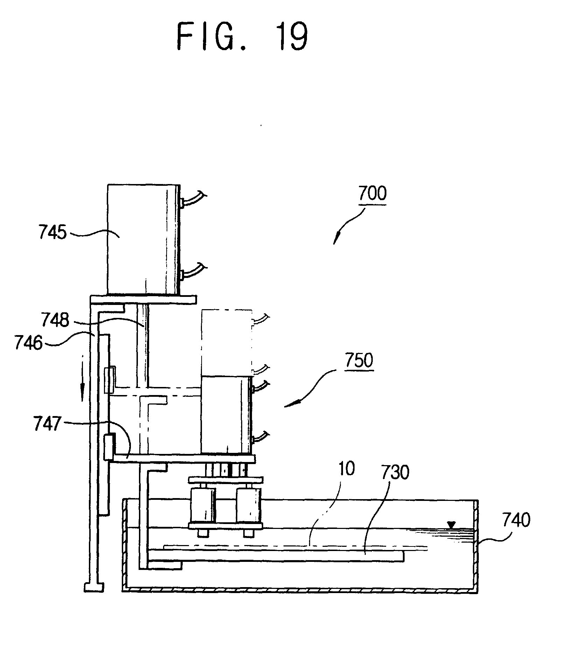

An apparatus for testing the weld between the annular cover 12 and the lower housing 11 of the balancer is illustrated in Figures 17, 18 and 19. The weld testing apparatus 700 comprises a jig 730 for receiving a welded balancer 10, a water tub 740, an elevation/de-elevation cylinder 745 for elevating/de-elevating the jig 730, and an air injection device 750 for injecting air into the balancer 710.

The elevation/de-elevation cylinder 745 is mounted on a frame 746, and a bracket 747 for supporting the jig 730 is mounted to one side of the frame 746. The elevation/de-elevation cylinder 745 includes a piston 748 for elevating/de-elevating the jig 730 via the bracket 747.

The air injection device 750 comprises a cylinder 751 mounted on the bracket 747 having a plate 754 mounted beneath it which is urged against the balancer 10 loaded on the jig 730 by the cylinder 751. Air injection nozzles 752 and a pair of sealing members 753 are mounted on the plate 754 beneath the cylinder 751. When the plate 754 is de-elevated by the cylinder 751 toward the balancer 10 loaded on the jig 730, the balancer 10 is urged against the jig 730 and firmly held in position. As the plate 754 drops, the air injection nozzles 752 communicate with air injection holes 7a and 8a formed in the wall of inner and outer races of the balancer 10, and the closing members 753 communicate with holes 7b and 8b formed in the wall of inner and outer races 19 of the balancer 10 and seal them.

When the balancer 10 is immersed in the tub 740 and the air injection device 750 is operated, air injected into the balancer will leak if a hole exists in the weld. The leak can be detected by the presence of air bubbles generated in the water tub 740.

To manufacture a balancer 13, the transferring apparatus 200 disposed between the first load platform 31 and the turntable 100 grips the lower housing 11 and transfers it to a recess 120 in the rotation apparatus 100. The turntable 150 is then rotated by the motor 130 to transfer the lower housing 11 to the ball dispensing apparatus 300.

The control device 340 of the ball dispensing apparatus 300 controls the control cylinder 341 to dispense balls 15 through the chute 337 as illustrated in Figure 7. When the required number of the balls 15 have been dispensed, as counted by the sensor 349, a signal is sent to the control cylinder 341 to prevent further balls from being dispensed.

The rotation table 150 is then rotated to move the housing 11 toward the second load platform 32. The transferring apparatus 200 disposed between the second load platform 32 and the rotation apparatus 100 grips the upper cover 12 loaded on the second load platform 32 and transfers it to the rotation apparatus 100, where it is placed on top of the lower housing 11.

The rotation table 150 is again rotated by the motor 130 to move the balancer housing 13 toward the tack-welding apparatus 400. The balancer housing 13 is then transferred to the tack-welding apparatus 400 by the transferring apparatus 200 disposed between the rotation apparatus 100 and the tack-welding apparatus 400, and is loaded on the jig 428 of the tack-welding apparatus 400 where it is rotatably supported by the support rollers 444.

When the balancer housing 13 is loaded on the jig 428, plate 432 is moved downward by the cylinder 430 to urge the annular cover 12 against the lower housing 11 on the jig 428. The annular cover 12 is welded by the welding device 470 to the lower portion 11 while the balancer housing 13 is held by the jig 428. The welding cylinder 436 is operated to move the welding electrodes 438 into contact with the balancer to tack-weld the annular cover 12 to the lower housing 11. The tack welding is performed by spot welding. When a tack weld is complete, the welding cylinder 436 moves the welding electrodes 438 up, and the rotation motor 439 rotates the balancer housing 13 by about 120 degrees to enable the balancer to be tack-welded again so that the annular cover is spot welded to the lower housing 11 in three places.

When the aforementioned welding step has been completed, the movement device 480 moves the balancer housing 13 in a horizontal direction to position the inner edge of the annular cover 12 below the welding cylinder 436 so that tack-welding of the inner edge of the cover 12 to the lower portion 11 can be carried out. The balancer 13 moves in response to operation of the motor 442 which drives the screw shaft 441 which passes through the guide member 440 fixed to the lower frame 425 to move the table 427 along the guide rails 426. The above described operation is repeated to tack-weld the inner edge of the cover 12 to the lower portion 11 of the balancer 13 at three locations spaced circumferentally by 120°.

When the tack-welding of the annular cover 12 to the lower portion 11 has been completed, cylinder 430 lifts the plate 432 away from the balancer 13 to release it. The balancer 13 is subsequently transferred to the seam-welding apparatus 500. As the tack-welding is ended, the pushing cylinder 430 moves the pushing plate 432 up, and thereby the balancer housing 13 is released from the pushed state. The balancer housing 13 which has undergone the tack-welding is transferred to the welding apparatus 500 by an additional transferring apparatus which in not shown in the figures.

The balancer 10 transferred to the welding apparatus 500 is loaded on the jig 500 of the welding apparatus 500 and is rotatably supported by support rollers 544, the plate 532 is moved downward by the cylinder 530, to firmly hold the balancer in position on the jig 500.

The balancer 13 is rotated by the motor 539 whilst the welding electrode 538 of the welder 570 welds the outer circumferential edge of the annular cover 12 to the lower housing 11 of the balancer 13. The welding electrode is cooled with water sprayed from cooling hose 575 during the welding process.

When the welding of the outer circumferential edge has been completed, the movement device 580 moves the balancer housing 13 to enable the inner circumferential edge of the annular cover 12 to be welded to the lower housing 11. The balancer 13 is moved in response to operation of a motor 542 which rotates a screw shaft 541 which passes through a guide block 540 fixed to the lower frame 525. The table 527 is moved along the guide rails 526 and the inner edge of the annular cover 12 is positioned below the welder 570.

The balancer housing 13 is now rotated and the welding electrode 538 of the welder 570 welds the annular cover 12 to the lower portion 11 of the balancer 13. When the welding process is complete, cylinder 530 lifts the plate 532 up to release the balancer 13 from the jig 500.

The welded balancer 10 is transferred to the water removing apparatus 600 and loaded on jig 681 where it is rotated by a rotation device (not shown) so that a fixing pin 682 protrudes into a fixing hole (not shown) formed on the balancer housing 13, at which point the balancer 10 stops rotating.

Air is injected into the balancer from cylinders 691 and any residual cooling water in the balancer 10 is discharged. Discharged water is also drawn out from the balancer 10 by the suction cylinders 693.

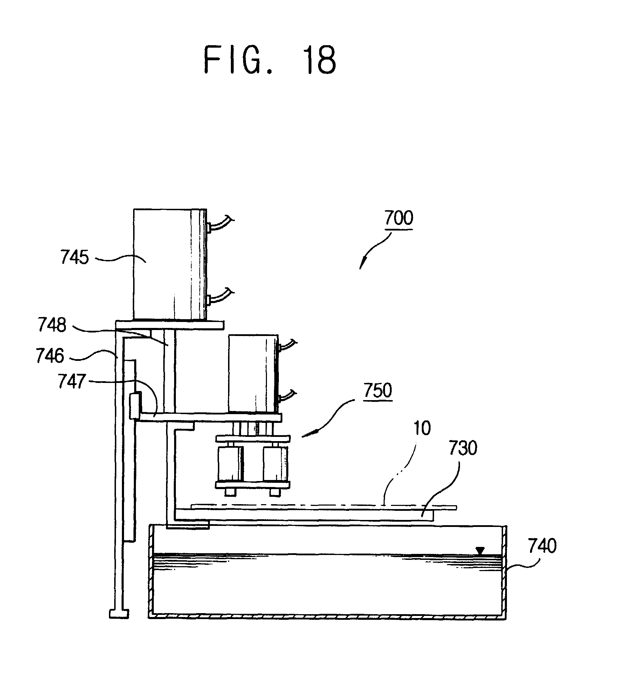

The balancer 10 is transferred to the weld testing apparatus 700 by an additional transferring apparatus which is not shown in the figures. The transferred balancer 10 is loaded on the jig 730 as shown in Figure 18. The plate 754 is then de-elevated by the fixing cylinder 751 to firmly retain the balancer on the jig 730, and bring the air injection nozzles 752 and the closing members 753 into communication with corresponding holes 7 and 8 respectively. The elevation/de-elevation cylinder 745 then lowers the bracket 747 to immerse the jig 730 into the water tub 740.

Air is injected into the balancer through the air injection nozzles 752. If a hole is present in the weld, air bubbles will be generated in the water which can easily be detected visually.

When the test is complete, the elevation/de-elevation cylinder 745 lifts the jig 730 to remove the balancer 10 from the water. The plate 754 is then elevated by the fixing cylinder 751 to release the balancer and remove the air injection nozzles 552 and the closing members 553 from the holes 7 and 8.

Finally, oil 16 is injected into the balancer 10 holes 7a and 8a, and the holes 7 and 8 are sealed. The process for manufacturing the balancer 10 is now complete.

As described above, the processes for feeding balls into the balancer, tack-welding the balancer, welding the balancer, removing water remaining in the balancer, and testing the quality of weld of the balancer are all performed automatically resulting in a faster manufacturing times and enhanced productivity.
Although the present invention has been described and illustrated in detail, it is clearly understood that the same is by way of illustration and example only and is not to be taken by way of limitation, wherein the scope of the present invention is limited only by the terms of the appended claims.

## Claims

1. A method of manufacturing a device for counteracting imbalance caused by the uneven distribution of a load in a rotary drum, comprising two members (11,12) and a plurality of balls (15), the method comprising the steps of driving transfer (200) means to transfer a first member (11) from a supply of first members (11) to a ball dispensing means (300); controlling the ball dispensing means (300) to dispense balls (15) into a first member (11); driving the transfer means (200) to transfer a second member (12) from a supply of second members (12) to place it on a first member (11); driving the transfer means (200) to transfer first and second members (11, 12) to a seam-welding means (500), and controlling the seam-welding means (500) to seam-weld a first member (11) to a second member (12).

2. A method according to claim 1, wherein the transfer means (200) includes a turntable (150), wherein the step of driving the transfer means (200) to transfer a first member (11) from a supply of first members (11) to the ball dispensing means (300) includes the step of driving the transfer means (200) to transfer a first member (11) from a supply of first members (11) to the turntable (150) and rotatably driving the turntable (150) to transfer a first member (11) to the ball dispensing means (300).

3. A method according to claim 3, wherein the step of driving the transfer means (200) to transfer the first and second members (11, 12) to the seam welding means (500) includes the step of rotating the turntable (150).

4. A method according to claim 1, including the step of driving the transfer means (200) to transfer the first and second members (11, 12) to a tack-welding means (400) and controlling the tack-welding means (400) to tack-weld the first member (11) to the second member (12).

5. A method according to claim 4, wherein the step of driving the transfer means (200) to transfer first and second members (11, 12) to tack-welding means (400) includes the step of rotating the turntable (150).

6. A method according to any preceding claim, including the steps of driving transfer means (200) to transfer first and second members (11, 12) to residual water expelling means (600) and controlling the residual water expelling means (600) to expel residual water.

7. A method according to any preceding claim, including the steps of driving transfer means (200) to transfer first and second members (11, 12) to weld testing means (700) and controlling the weld testing means (700) to test a weld between members (11, 12).

8. An apparatus for manufacturing a device for counteracting imbalance caused by the uneven distribution of a load in a rotary drum, comprising two members (11, 12) and a plurality of balls (15) , the apparatus including ball dispensing means (300) for dispensing balls into a first member (11), seam welding means (500) for seam-welding a second member (12) to a first member (11) and transfer means (200) for transferring a first member (11) from a supply of first members (11) to the ball dispensing means (300), for transferring a second member (12) from a supply of second members (12) to place it on a first member (11) and for transferring first and second members (11, 12) to the seam welding means (500).

9. An apparatus according to claim 8, wherein the transfer means (200) includes a turntable (150).

10. An apparatus according to claim 8 or 9, including tack-welding means (400) for tack-welding a second member (12) to a first member (11), the transfer means (200) being operable to transfer members (11, 12) to the tack-welding means (400).

11. An apparatus according to any of claims 8 to 10, including residual water expelling means (600), the transfer means (200) being operable to transfer members (11, 12) to the residual water expelling means (600).

12. An apparatus according to any of claims 8 to 11, including weld testing means (700) for testing a weld between members (11, 12), the transfer means (200) being operable to transfer members (11, 12) to the weld testing means (700).

13. A method for manufacturing a balancer used in a drum type washing machine, said balancer having a balancer housing comprised of a lower housing for forming an annular race at a dehydration tub and an upper cover for covering said lower housing, and a plurality of balls accommodated in said race, said balancer for damping vibrations of said dehydration tub, said method comprising the steps of:
preparing an appliance for manufacturing said balancer, said appliance including a first loader on which said lower housing is loaded, a second loader on which said upper cover is loaded, a means for transferring said lower housing and/or said upper cover, an apparatus for feeding said balls to said lower housing, an apparatus for tack-welding said balancer housing, and an apparatus for welding said balancer housing;
transferring said lower housing from said first loader to said ball feeding apparatus using said transferring means;
feeding said balls to said lower housing using said ball feeding apparatus; transferring said upper cover from said second loader to said lower housing using said transferring means;
tack-welding said lower housing and said upper cover using said tack-welding apparatus;
transferring said balancer housing to said welding apparatus using said transferring means; and
welding said lower housing and said upper cover using said welding apparatus.

14. The method for manufacturing a balancer as claimed in claim 13, wherein said transferring means comprises a rotation table, and a plurality of transferring apparatuses for transferring said lower housing and/or said upper cover; and
the step of transferring said lower housing comprises steps of transferring said lower housing to said rotation table using said transferring apparatus, and rotating said rotation table so that said lower housing is transferred to said ball feeding apparatus.

15. The method for manufacturing a balancer as claimed in claim 14, wherein the step of transferring said upper cover comprises steps of rotating said rotation table, and placing said upper cover on said lower housing using said transferring apparatus.

16. The method for manufacturing a balancer as claimed in claim 15, further comprising a step of sprinkling cooling water on an welding electrode of said welding apparatus during the step of welding.

17. The method for manufacturing a balancer as claimed in claim 16, further comprising steps of:
preparing an apparatus for removing remaining cooling water which has infiltrated into said balancer housing; and
removing the remaining water in said balancer housing using said remaining water removing apparatus, after the step of welding.

18. The method for manufacturing a balancer as claimed in claim 13, further comprising steps of:
preparing an apparatus for testing quality of weld of said balancer housing; and
testing the quality of weld of said balancer housing using said weld quality testing apparatus, after the step of welding.

19. The method for manufacturing a balancer as claimed in claim 18, further comprising a step of re-welding said balancer housing of which a status of weld is abnormal, after the step of testing.

20. The method for manufacturing a balancer as claimed in claim 13, further comprising a step of injecting oil into said balancer after the step of welding.
